# EUROPÄISCHE PATENTSCHRIFT

(11) **EP 1 532 218 B1**
(45) Veröffentlichungstag und Bekanntmachung des Hinweises auf die Patenterteilung: **12.09.2007**
(21) Anmeldenummer: 03794909.6
(22) Anmeldetag: 21.08.2003
(51) Int. Cl.: C09D 201/00, C09D 7/12, C09D 5/02, C09D 123/28

(54) **HAFTZUSATZ FUR EINEN WASSERLACK**
ADHESIVE ADDITIVE FOR A WATER LACQUER
ADDITIF D'ADHERENCE POUR UNE PEINTURE A L'EAU

(30) Priorität: 29.08.2002 DE 10240733
(43) Veröffentlichungstag der Anmeldung: 25.05.2005
(73) Patentinhaber: KARL WÖRWAG LACK- UND FARBENFABRIK GMBH & CO. KG, 70435 Stuttgart (DE)
(72) Erfinder: ORTMEIER, Jürgen, 73230 Kirchheim (DE); BAUMGÄRTEL, Ramona, 70567 Stuttgart (DE); MÜLLER, Tanja, 70825 Korntal-Münchingen (DE)
(74) Vertreter: Ruff, Michael
(86) Internationale Anmeldenummer: PCT/EP2003/009255
(87) Internationale Veröffentlichungsnummer: WO 2004/024839

(56) Entgegenhaltungen:
- EP-A- 0 539 710
- WO-A-02/38689
- WO-A-03/046092
- DE-A- 3 910 901
- US-A- 5 198 485
- US-A- 5 397 602

## Beschreibung

Die Erfindung betrifft die Verwendung einer Zusammensetzung als Haftzusatz für einen Wasserlack, und ein Verfahren zur Lackierung von Kunststoffsubstraten.

In der Industrie werden heutzutage zunehmend Kunststoffformteile eingesetzt, welche über eine Lackierung verfügen. Dies betrifft vor allem Kunststoffteile an Kraftfahrzeugen, wie beispielsweise Stoßfänger, Schutzleisten, Spoiler, Radkastenverkleidungen und Seitenschweller. Diese Teile werden in zunehmendem Maße aus Kunststoffen mit einem Anteil an Polypropylen (PP) von bis zu 100 % gefertigt. Die Kunststoffteile, welche zusammen mit Metallteilen, vor allem in der Automobilindustrie, eingesetzt werden, erhalten häufig eine Lackierung in der gleichen Farbe, wie sie die übrigen Metallteile besitzen.

Derzeit werden diese Kunststofformteile zunächst mit einer Grundierung versehen und anschließend zunächst mit einem Basislack in der gewünschten Farbe und danach mit einem Klarlack lackiert. Hierfür stehen sowohl Lösemittellacke wie auch Wasserlacke zur Verfügung. Um den Lackiervorgang um den zusätzlichen Arbeitsschritt der Grundierung zu reduzieren, wurden spezielle Rezepturen für Lösemittellacke entwickelt (EP 455 211), welche eine Haftung des Lackes direkt auf der Kunststoffoberfläche ohne eine zusätzliche Grundierungsschicht ermöglichen. Bisher war es jedoch nicht möglich, auch Hydrobasislacke (HBL), welche aufgrund des geringeren Lösemittelanteils von maximal 25 % aus ökologischen, sicherheitstechnischen und gesundheitlichen Gesichtspunkten den klassischen Lösemittellacken vorzuziehen sind, für eine direkte Lackierung von Kunststoffteilen mit einem PP-Anteil von bis zu 100 % einzusetzen.

Aufgabe der vorliegenden Erfindung ist demnach die Bereitstellung einer technischen Lösung, welche die direkte Lackierung von Kunststoffformteilen, insbesondere mit einem Polypropylenanteil von bis zu 100 %, ermöglicht wobei der resultierende lack eine gute Haftung auf dem Kunststoffuntergrund haben soll, vorzugsweise entsprechend der einer Lackierung mit vorangehender Grundierung. Insbesondere soll die Lackierung den gewünschten Farbton ergeben.

Diese Aufgabe wird gelöst durch die Verwendung einer Zusammensetzung als Haftzusatz für einen Wasserlack, welche ein Bindemittel und ein Pigment enthält, sowie halogenierte Polyolefine (HPO), Wasser und Lösungsmittel gemäß dem unabhängigen Anspruch 1.

Die Aufgabe wird ebenfalls gelöst durch ein Verfahren zur Lachierung eines Kunststoffsubstrats gemäß dem unabhängigen Anspruch 14. Vorteilhafte Weiterbildungen sind in den anhängigen Ansprüchen angegeben.

Gemäß der erfindungsgemäßen Verwendung enthält die Zusammensetzung 0,1 bis 40 Gew.-% mindestens eines Bindemittels (gerechnet als Festkörper) und 0,1 bis 45 Gew.-% mindestens eines Pigments sowie 0,5 bis 30 Gew.-% mindestens eines halogenierten Polyolefins (HPO), gerechnet als Festkörper, und 0 bis 80 Gew.-% Wasser, 0 bis 25 Gew.-% Lösungsmittel, sowie gegebenenfalls weitere für Wasserlacke übliche Additive. Die oben angegebenen Gew.-%-Angaben einschließlich der Additive addieren sich insgesamt zu 100 Gew.-%.

Gegebenanfalls Kann die Zusammensetzung 0,1-45 Gew.-% Füllstoffe enthalten, worzugsweise 0,1 bis 30 Gew.-%, insbesondere 5 Gew.-% bis 20 Gew.-%, besonders bevorzugt 13 Gew.-% bis 17 Gew.-%.

Bei den Pigmenten und Füllstoffen handelt es sich in der Regel um Feststoffe. Daher bezieht sich der Anteil Pigmente und Füllstoffe auf den Anteil gerechnet als Feststoff.

Die Vorteile der Erfindung bestehen unter anderem darin, dass durch Zugabe des Haftzusatzes konventionelle Wasserlacke unmittelbar, als erste Schicht, zur Lackierung von Kunststoffoberflächen eingesetzt werden können. Dadurch kann bei, insbesondere in der Automobilindustrie sehr verbreiteten, Kunststoffsubstraten auf einen zusätzlichen Arbeitsschritt bei der Lackierung, die Grundierung, verzichtet werden. Zudem ist durch die Erfindung eine Nass-in-Nass-Lackierung möglich. Daraus ergeben sich wesentliche Einsparungen bezüglich Zeitaufwand, Materialaufwand und Kosten.

Mit konventionellen Wasserlacken ist es notwendig, einen Grundierungsschritt und gegebenenfalls einen Zwischenschliff durchzuführen, wodurch bei Lackierungsarbeiten ein zeitaufwendiger und meist manuell durchzuführender Arbeitschritt anfällt. Die Verwendung des erfindungsgemäßen Wasserlacks als Reparaturlack ermöglicht den Verzicht auf eine Grundierung und einen Zwischenschliff der zu lackierenden Oberfläche.

Beschichtungszusammensetzungen, die als Haftgrundierungsmittel bzw. als Primer verwendet werden, sind beispielsweise in der WO 03/046092 A, der WO 02/38689, der US-5,397,602, der DE 39 10 901 und in der EP-A-0 539 710 beschrieben.

In einer Ausführungsform der Erfindung beträgt der Anteil des Bindemittels (gerechnet als Festkörper) vorteilhafterweise 1 Gew.-% bis 30 Gew.-%, vorzugsweise 8 Gew.-% bis 20 Gew.-% und insbesondere 10 Gew.-% bis 12 Gew.-%.

Bei dem Bindemittel des erfindungsgemäßen Haftzusatzes kann es sich um ein Bindemittel auf Basis von Acrylharzen, Melaminharzen und/oder Polyurethanen handeln. In einer bevorzugten Ausführungsform handelt es sich bei dem Bindemittel um ein Polyurethanharz.

Der Anteil an Pigment kann in einer Ausführungsform 0,1 Gew.-% bis 30 Gew.-%, vorzugsweise 5 Gew.-% bis 20 Gew.-%, insbesondere 13 Gew.-% bis 17 Gew.-%, betragen.

In einer besonderen Ausführungsform der Erfindung handelt es sich bei dem Pigment um ein leitfähiges Pigment.

Bei dem halogenierten Polyolefin (HPO) handelt es sich gemäß einer bevorzugten Ausführungsform um ein chloriertes Polyolefin (CPO). Es ist jedoch auch möglich andere halogenierte Polyolefine, insbesondere fluorierte (FPO) oder bromierte Polyolefine (BPO) einzusetzen. In einer besonders bevorzugten Ausführungsform handelt es sich bei dem chlorierten Polyolefin um ein chloriertes Polypropylen. Denkbar ist auch, andere chlorierte Polyolefine einzusetzen.

Gemäß einer Ausführungsform beträgt der Anteil (gerechnet als Festkörper) der chlorierten Polyolefine (CPO) vorteilhafterweise 1 Gew.-% bis 20 Gew.-%, vorzugsweise 3 Gew.-% bis 10 Gew.-%, insbesondere 6 Gew.-% bis 8 Gew.-% und insbesondere bevorzugt ca. 7 Gew.-%.

In einer vorteilhaften Ausführung handelt es sich bei dem chlorierten Polyolefin um ein Polyolefin mit einem Chlorgehalt von 0,5 Gew.-% bis 45 Gew.-%, vorzugsweise 5 Gew.-% bis 30 Gew.-%, bevorzugt 10 Gew.-% bis 20 Gew.-% und insbesondere ca. 16 Gew.-% bezogen auf den Festkörpergehalt der chlorierten Polyolefine.

Das Molekulargewicht der chlorierten Polyolefine (CPO) beträgt vorzugsweise 5.000 bis 200.000 g/Mol, bevorzugt 10.000 bis 170.000 g/Mol, insbesondere 20.000 bis 100.000 g/Mol, insbesondere bevorzugt 30.000 bis 60.000 g/Mol.

Der Anteil an Wasser in der Zusammensetzung gemäß der erfindungsgemäßen Verwendung beträgt vorteilhafterweise 20 Gew.-% bis 80 Gew.-%, vorzugsweise 40 Gew.-% bis 70 Gew.-%, insbesondere ca. 60 Gew.-%.

Die Zusammensetzung kann auch einen Anteil an Lösungsmitteln enthalten. Unter Lösungsmitteln werden hier im Rahmen der vorliegenden Erfindung organische Lösungsmittel verstanden. Vorteilhafterweise beträgt der Anteil an Lösungsmitteln 1 bis 20 Gew.-%, vorzugsweise 2 bis 10 Gew.-% und insbesondere ca. 5 Gew.-%. In einer Ausführungsform handelt es sich bei den Lösungsmitteln um Glykolether und Testbenzin.

Da das CPO häufig nur in organischen Lösungsmitteln löslich ist, handelt es sich insbesondere bei dem Lösungsmittel des CPO vorzugsweise um Xylol, Toluol und/oder Benzinfraktionen, insbesondere um Xylol. In weiteren Ausführngsformen sind auch Mischungen von Lösungsmitteln denkbar. Es ist auch möglich eine Mischung aus Lösungsmittel und Wasser einzusetzten. In einer bevorzugten Ausführungsform ist das CPO in Wasser löslich.

Im Rahmen der erfindungsgemäßen Verwendung eignet sich die beschriebene Zusammensetzung besonders für einen Wasserlack, welcher mindestens einen für Wasserlacke üblichen Basislack enthält. Das Gewichtsverhältnis von Haftzusatz zu Basislack im Wasserlack beträgt Vorzugsweise 30:70 bis 50:50. In einer bevorzugten Ausführungsform beträgt das Gewichtsverhältnis von Haftzusatz zu Basislack 50:50. In einer besonders bevorzugten Ausführungsform beträgt das Gewichtsverhältnis von Haftzusatz zu Basislack 30:70.

Gemäß einer Ausführungsform handelt es sich bei dem Wasserlack um einen Einkomponentenlack. Es ist auch möglich, daß es sich um einen Zweikomponentenlack handelt. Ein Zweikomponentenlack enthält neben dem erfindungsgemäßen Wasserlack noch einen Härter. Bei dem Härter kann es sich um einen üblicherweise verwendeten Härter handeln und/oder um einen Härter, welcher ein HPO enthält.

Die Menge des Härters beträgt vorteilhafterweise 0,5 Gew.-% bis 25 Gew.-%, vorzugsweise 1 Gew.-% bis 15 Gew.-%, insbesondere ca. 5 Gew.-%. In einer besonderen Ausführungsform beträgt das Gewichtsverhältnis von Haftzusatz zu Basislack zu Härter 50:50:5. In einer weiteren Ausführungsform beträgt das Gewichtsverhältnis von Haftzusatz zu Basislack zu Härter 30:70:5.

Entsprechend ist auch ein Verfahren zur Lackierung von Kunststoffsubstraten, insbesondere zur Lackierung von Kraftfahrzeugteilen, mit einem solchen Wasserlack Gegenstand der vorliegenden Erfindung, wobei dem Wasserlack vor dem Aufbringen auf das Kunststoffsubstrat eine Zusammensetzung als Haftzusatz zugesetzt wird, wie sie oben bereits beschrieben wurde. Bei den Kunststoffsubstraten handelt es sich vorzugsweise um Teile, welche einen Polypropylenanteil von bis zu 100 Gew.-% enthalten. Es ist jedoch auch denkbar, dass die Kunststoffsubstrate aus mindestens einem anderen, vorzugsweise polymeren, Material bestehen.

Vorteilhafterweise werden die zu lackierenden Kunststoffsubstrate unmittelbar vor Aufbringen der Wasserlackschicht an der Oberfläche mittels einer Flamme, vorzugsweise einer Gasflamme, beflammt. Dadurch werden Verunreinigungen auf der Oberfläche des Substrats, insbesondere Reste von Trennmitteln, entfernt und, insbesondere durch das Einbringen polarer Gruppen, die Haftung des Wasserlacks auf der Kunststoffoberfläche, insbesondere der Polypropylenoberfläche, ermöglicht. Bei der Flamme handelt es sich insbesondere um eine blaue oxidierende Flamme.

Es ist auch denkbar, dass die Kunststoffsubstrate vor der Beflammung mit einem Entfettungsmittel von fettigen Rückständen auf der Oberfläche gereinigt werden, bevor der Wasserlack aufgetragen wird.

Eine Auftragung des Wasserlackes auf das Kunststoffsubstrat kann beispielsweise mittels Lackierpistolen erfolgen.

Im folgenden wird die Verwendung und das Verfahren gemäß der vorliegenden Erfindung durch ausführliche Beschreibung von besonderen Ausführungsformen sowie durch Beispiele erläutert. In diesen Beispielen können einzelne Merkmale der Erfindung allein oder in Kombination mit anderen Merkmalen verwirklicht sein. Die beschriebenen Beispiele dienen lediglich zur Erläuterung und zum besseren Verständnis der Erfindung und sind in keinster Weise einschränkend zu verstehen.

### Beispiele

### a) Herstellung eines Haftzusatzes (die Prozentangaben beziehen sich im folgenden jeweils auf Gew.-% der Handelsformen der eingesetzten Rohstoffe):

Zunächst werden 15 % eines Bindemittels in Form eines Polyurethanharzes (Daotan, 32 %ig in Wasser, VTW 1237, Solutia GmbH & Co. KG) in einem Mischer vorgelegt. Anschließend werden die folgenden Rohstoffe mit einer Zahnscheibe einzeln langsam unter Rühren zugegeben, wobei die Temperatur 40 °C nicht überschreiten sollte:
0,4 % eines Dispergierhilfsmittels (Amp-90, Angus-Chemie GmbH), 2 % demineralisiertes Wasser (Herkommer und Bangerter GmbH & Co.), 1 % Testbenzin (Testbenzin 145/200, Brenntag Chemiepartner GmbH), 0,5 % Entschäumer (Additol VXW 4973, Solutia GmbH & Co. KG), 0,3 % Dispergiermittel (Orotan 731-K 25 %, Rohm & Haas Deutschland GmbH), sowie 4 % eines Antiabsetzmittels (BENTONE EW, Rheox, Inc. USA). Diese Mischung wird ca. 5 min. gerührt.

Anschließend werden folgende Füllstoffe/Pigmente mit einer Zahnscheibe einzeln langsam unter Rühren zugeben:
4,5 % Pigment (Talkum LUZENAC 10M2, Luzenac Deutschland GmbH), 5 % Füllstoff (Blanc-Fix-Micro, Sachtleben Chemie GmbH), 5 % eines weiteren Füllstoffs (Omya BLS, Omya GmbH) sowie 0,5 % eines Antiabsetzmittels (Aerosil R 972, Degussa AG). Die gesamte Mischung wird ca. 5 min. gerührt, wobei die Temperatur 40 °C nicht überschreiten sollte. Anschließend wird das Gemisch in einer Perlmühle fein zermahlen (Partikelgröße < 20 µm). Auch während des Mahlvorgangs sollte die Temperatur 40 °C nicht überschreiten. Die feingemahlene Mischung wird aus der Perlmühle entnommen, und diese wird mit 2 % entmineralisiertem Wasser, welches zur Mischung hinzugegeben wird, gespült.

Danach werden die folgenden Rohstoffe mit einer Zahnscheibe einzeln langsam unter Rühren zugegeben:
19,5 % Bindemittel (Daotan VTW 1237, 32 %ig in Wasser, Solutia GmbH & Co. KG), 35 % eines chlorierten Polyolefins (Hardlen EH 202, 20 %ig in Wasser, Siber Hegner GmbH), 1 % entmineralisiertes Wasser, 0,3 % eines Oberflächennetzmittels (Troysol LAC, Troy Chemical Corporation), 1 % eines Glykolethers (Butyldiglycol, Brenntag Chemiepartner GmbH), 1 % eines weiteren Glykolethers (DOVANOL DPnB, Dipropylenglycol-n-butylether, Dow Chemical Company), 0,5 % Testbenzin (Testbenzin 145/200, Brenntag Chemiepartner GmbH) sowie 0,5 % eines Entschäumers (Additol VXW 4973). Die Mischung wird ca. 5 min. gerührt.

Im Anschluss wird die Viskosität mit 1 % Verdicker (VISCALEX HV 30, Ciba Spezialitätenchemie) eingestellt. Die fertige Mischung wird weitere 15 min. gerührt.

### b) Herstellung des Wasserlackes:

### Einkomponentenwasserlack:

Es werden 50 Gew.-Teile des Hydrobasislacks (Wörwag 104131) vorgelegt und unter Rühren mit einer zahnlosen Rührscheibe langsam 50 Gew.-Teile des Haftzusatzes zugegeben und anschließend für weitere 5 min. gerührt.

### Zweikomponentenwasserlack:

Zunächst werden 50 Gew.-Teile des Hydrobasislacks (Wörwag 104131) vorgelegt und gut durchmischt. Unter Rühren mit einer zahnlosen Rührscheibe werden anschließend langsam 50 Gew.-Teile Haftzusatz zugegeben und weitere 5 min. gerührt. Zu dieser Mischung werden weitere 5 Gew.-Teile eines Härters (Desmodur N 3368 SN, Bayer AG) zugegeben, so dass insgesamt ein Gewichtsverhältnis von 50:50:5 (Basislack:Haftzusatz:Härter) besteht.

### c) Haftungstest:

Das Kunststoffsubstrat aus Polypropylen wird zunächst mit einem Entfettungsmittel gereinigt und anschließend mit einem Handflammgerät mit einer blauen oxidierenden Flamme kurz beflammt. Anschließend wird der Einkomponentenlack mit einer Lackierpistole auf die Polypropylenkunststoffoberfläche appliziert. Zur Trocknung des Lackes wird für ca. 5 min. bei Raumtemperatur abgelüftet und anschließend wird eine zweite Lackschicht, bestehend aus dem Hydrobasislack ohne Haftzusatz nass in nass appliziert und für ca. 10 min. bei Raumtemperatur abgelüftet und anschließend ca. 10 min. bei 80 °C getrocknet. Als abschließende Lackschicht wird ein Klarlack aufgebracht, welcher zunächst ca. 10 min. bei Raumtemperatur und anschließend ca. 45 min. bei 80 °C getrocknet wird.

Mit der lackierten Oberfläche wird ein Gitterschnittest nach der Norm EN ISO 2409 durchgeführt.

Tabelle 1 zeigt die Ergebnisse des Gitterschnittests eines Einkomponenten- (1 K) sowie eines Zweikomponenten- (2 K) Lackes auf einer geflammten sowie einer ungeflammten 100 %igen Polypropylenkunststoffoberfläche am Beispiel zweier Wasserlacke mit dem Mischungsverhältnissen Haftzusatz zu Hydrobasislack 50:50, sowie 30:70. Als Referenz sind zusätzlich die Ergebnisse ohne Haftzusatz angegeben.

**Tabelle 1: Ergebnisse des Haftungsprüfung nach EN ISO 2409**

| Anteil Haftzusatz | Anteil Basislack | Anteil Härter | 1K | 2 K | Vorbehandlung | Ergebnis Gittertest |
|---|---|---|---|---|---|---|
| 50 | 50 | | X | | Geflammt | 0 |
| 50 | 50 | | X | | Ungeflammt | 2-3 |
| 50 | 50 | 5 | | X | Geflammt | 0 |
| 50 | 50 | 5 | | X | Ungeflammt | 3-4 |
| 30 | 70 | | X | | Geflammt | 0 |
| 30 | 70 | | X | | Ungeflammt | 3 |
| 30 | 70 | 5 | | X | Geflammt | 0 |
| 30 | 70 | 5 | | X | Ungeflammt | 3 |
| 0 | 100 | | X | | Geflammt | 2 |
| 0 | 100 | | X | | Ungeflammt | 4 |
| 0 | 100 | 5 | | X | Geflammt | 1 |
| 0 | 100 | 5 | | X | Ungeflammt | 4-5 |

## Patentansprüche

1. Verwendung einer Zusammensetzung, enthaltend
- 0,1 bis 40 Gew.-% mindestens eines Bindemittels (gerechnet als Feststoff) und
- 0,1 bis 45 Gew.-% mindestens eines Pigments und
- 0,5 bis 30 Gew.-% mindestens eines halogenierten Polyolefins (HPO) (gerechnet als Festkörper) und
- 0 bis 80 Gew.-% Wasser, und
- 0 bis 25 Gew.-% Lösungsmittel,
wobei sich die oben genannten Gew.-% Angaben zu 100 Gew.-% addieren, als Haftzusatz für einen Wasserlack.

2. Verwendung nach Anspruch 1, **dadurch gekennzeichnet, dass** (gerechnet als Festkörper) 5 Gew.-% bis 30 Gew.-% Bindemittel in der Zusammensetzung enthalten sind.

3. Verwendung nach Anspruch 1 oder Anspruch 2, **dadurch gekennzeichnet, dass** Bindemittel auf Basis von Acrylharzen, Melaminharzen und/oder Polyurethanen in der Zusammensetzung enthalten sind.

4. Verwendung nach einem der vorhergehenden Ansprüche, **dadurch gekennzeichnet, dass** 0,1 Gew.-% bis 30 Gew.-% Pigmente in der Zusammensetzung enthalten sind.

5. Verwendung nach einem der vorhergehenden Ansprüche, **dadurch gekennzeichnet, dass** es sich bei dem Pigment um ein leitfähiges Pigment handelt.

6. Verwendung nach einem der vorhergehenden Ansprüche, **dadurch gekennzeichnet, dass** es sich bei dem halogenierten Polyolefin um ein chloriertes Polyolefin (CPO) handelt.

7. Verwendung nach Anspruch 6, **dadurch gekennzeichnet, dass** (gerechnet als Festkörper) der Anteil chlorierter Polyolefine (CPO) in der Zusammensetzung 1 Gew.-% bis 20 Gew.-% beträgt.

8. Verwendung nach Anspruch 6 oder 7, **dadurch gekennzeichnet, dass** (gerechnet als Festkörper) der Anteil chlorierter Polyolefine in der Zusammensetzung 6 Gew.-% bis 8 Gew.-% beträgt.

9. Verwendung nach einem der Ansprüche 6 bis 8, **dadurch gekennzeichnet, dass** es sich bei dem chlorierten Polyolefin um ein Polyolefin mit einem Chlorgehalt von 0,5 Gew.-% bis 45 Gew.-%, bezogen auf den Festkörpergehalt der chlorierten Polyolefine, handelt.

10. Verwendung nach einem der Ansprüche 6 bis 9, **dadurch gekennzeichnet, dass** es sich bei dem chlorierten Polyolefin um ein Polyolefin mit einem Molekulargewicht von 5.000 bis 200.000 g/Mol handelt.

11. Verwendung nach einem der vorhergehenden Ansprüche, **dadurch gekennzeichnet, dass** 20 Gew.-% bis 80 Gew.-% Wasser in der Zusammensetzung enthalten ist.

12. Verwendung nach einem der vorhergehenden Ansprüche, **dadurch gekennzeichnet, dass** 1 Gew.-% bis 20 Gew.-% Lösungsmittel in der Zusammensetzung enthalten ist.

13. Verwendung nach einem der vorhergehenden Ansprüche, **dadurch gekennzeichnet, dass** die Zusammensetzung Füllstoffe enthält.

14. Verfahren zur Lackierung eines Kunststoffsubstrats mit einem Wasserlack, **dadurch gekennzeichnet, dass** dem Wasserlack vor dem Aufbringen auf das Kunststoffsubstrat ein Haftzusatz zugesetzt wird, enthaltend
- 0,1 bis 40 Gew.-% mindestens eines Bindemittels (gerechnet als Feststoff) und
- 0,1 bis 45 Gew.-% mindestens eines Pigments und
- 0,5 bis 30 Gew.-% mindestens eines halogenierten Polyolefins (HPO) (gerechnet als Festkörper) und
- 0 bis 80 Gew.-% Wasser, und
- 0 bis 25 Gew.-% Lösungsmittel,
wobei sich die oben genannten Gew.-% Angaben zu 100 Gew.-% addieren.

15. Verfahren nach Anspruch 14, **dadurch gekennzeichnet, dass** der Haftzusatz Füllstoffe enthält.

16. Verfahren nach einem der Ansprüche 14 oder 15, **dadurch gekennzeichnet, dass** der Wasserlack ein Einkomponentenlack ist.

17. Verfahren nach einem der Ansprüche 14 oder 15, **dadurch gekennzeichnet, dass** der Wasserlack ein Zweikomponentenlack ist, der einen Härter enthält.

18. Verfahren nach Anspruch 17, **dadurch gekennzeichnet, dass** die Menge des Härters 0,5 Gew.-% bis 25 Gew.-% beträgt.

19. Verfahren nach einem der Ansprüche 14 bis 18, wobei das Kunststoffsubstrat mindestens teilweise aus mindestens einem polymeren, Material besteht.

20. Verfahren nach einem der Ansprüche 14 bis 19, wobei das Kunststoffsubstrat aus Kunststoffen mit einem Anteil an Polypropylen von bis zu 100 Gew.-% besteht.

21. Verfahren nach einem der Ansprüche 14 bis 20, **dadurch gekennzeichnet, dass** der Wasserlack mittels einer Lackierpistole auf das Kunststoffsubstrat aufgebracht wird.

22. Verfahren nach einem der Ansprüche 14 bis 21, **dadurch gekennzeichnet, dass** die Oberfläche der Kunststoffsubstrate vor dem Aufbringen der Wasserlackschicht beflammt wird.

23. Verfahren nach Anspruch 22, **dadurch gekennzeichnet, dass** die Oberfläche der Kunststoffsubstrate vor der Beflammung mit einem Entfettungsmittel gereinigt wird.

## Claims

1. Use of a composition containing
- 0.1% to 40% by weight of at least one binder (calculated as solids) and
- 0.1% to 45% by weight of at least one pigment and
- 0.5% to 30% by weight of at least one halogenated polyolefin (HPO) (calculated as solids) and
- 0% to 80% by weight of water, and
- 0% to 25% by weight of solvents,
the abovementioned percentages by weight adding up to 100% by weight, as an adhesion additive for an aqueous paint.

2. Use according to Claim 1, **characterized in that** (calculated as solids) there are 5% to 30% by weight of binder(s) in the composition.

3. Use according to Claim 1 or Claim 2, **characterized in that** binders based on acrylic resins, melamine resins and/or polyurethanes are present in the composition.

4. Use according to any one of the preceding claims, **characterized in that** 0.1% to 30% by weight of pigments are present in the composition.

5. Use according to any one of the preceding claims, **characterized in that** the pigment is a conductive pigment.

6. Use according to any one of the preceding claims, **characterized in that** the halogenated polyolefin is a chlorinated polyolefin (CPO).

7. Use according to Claim 6, **characterized in that** (calculated as solids) the fraction of chlorinated polyolefins (CPO) in the composition is 1% to 20% by weight.

8. Use according to Claim 6 or 7, **characterized in that** (calculated as solids) the fraction of chlorinated polyolefins in the composition is 6% to 8% by weight.

9. Use according to any one of Claims 6 to 8, **characterized in that** the chlorinated polyolefin is a polyolefin having a chlorine content of 0.5% to 45% by weight, based on the solids content of the chlorinated polyolefins.

10. Use according to any one of Claims 6 to 9, **characterized in that** the chlorinated polyolefin is a polyolefin having a molecular weight of 5,000 to 200,000 g/mol.

11. Use according to any one of the preceding claims, **characterized in that** 20% to 80% by weight of water is present in the composition.

12. Use according to any one of the preceding claims, **characterized in that** 1% to 20% by weight of solvent is present in the composition.

13. Use according to any one of the preceding claims, **characterized in that** the composition comprises fillers.

14. Method of coating a plastic substrate with an aqueous paint, **characterized in that** the aqueous paint, prior to application to the plastic substrate, is admixed with an adhesion additive containing
- 0.1% to 40% by weight of at least one binder (calculated as solids) and
- 0.1% to 45% by weight of at least one pigment and
- 0.5% to 30% by weight of at least one halogenated polyolefin (HPO) (calculated as solids) and
- 0% to 80% by weight of water, and
- 0% to 25% by weight of solvents,
the abovementioned percentages by weight adding up to 100% by weight.

15. Method according to Claim 14, **characterized in that** the adhesion additive comprises fillers.

16. Method according to either of Claims 14 and 15, **characterized in that** the aqueous paint is a one-component paint.

17. Method according to either of Claims 14 and 15, **characterized in that** the aqueous paint is a two-component paint which comprises a curative.

18. Method according to Claim 17, **characterized in that** the amount of the curative is 0.5% to 25% by weight.

19. Method according to any one of Claims 14 to 18, the plastic substrate being composed at least partly of at least one polymeric material.

20. Method according to any one of Claims 14 to 19, the plastic substrate being composed of plastics having a polypropylene fraction of up to 100% by weight.

21. Method according to any one of Claims 14 to 20, **characterized in that** the aqueous paint is applied by means of a paint spraying gun to the plastic substrate.

22. Method according to any one of Claims 14 to 21, **characterized in that** the surface of the plastic substrates is flamed prior to application of the aqueous paint film.

23. Method according to Claim 22, **characterized in that** the surface of the plastic substrates is cleaned with a degreasing agent prior to flaming.

## Revendications

1. Utilisation d'une composition contenant
- 0,1 à 40 % en poids d'au moins un liant (calculé en tant que matière solide) et
- 0,1 à 45 % en poids d'au moins un pigment et 0,5 à 30 % en poids d'au moins une polyoléfine halogénée (HPO) (calculé en tant que solide) et
- 0 à 80 % en poids d'eau et
- 0 à 25 % en poids de solvant,
les données en % en poids mentionnées ci-dessus s'ajoutant pour donner 100 % en poids, en tant qu'additif d'adhérence pour une peinture à l'eau.

2. Utilisation selon la revendication 1, **caractérisée en ce que** 5 % en poids à 30 % en poids de liant (calculé en tant que matière solide) sont contenus dans la composition.

3. Utilisation selon la revendication 1 ou 2, **caractérisée en ce que** des liants à base de résines acrylate, de résines mélamine et/ou de polyuréthanes sont contenus dans la composition.

4. Utilisation selon l'une quelconque des revendications précédentes, **caractérisée en ce que** 0,1 % en poids à 30 % en poids de pigment sont contenus dans la composition.

5. Utilisation selon l'une quelconque des revendications précédentes, **caractérisée en ce que** le pigment est un pigment conducteur.

6. Utilisation selon l'une quelconque des revendications précédentes, **caractérisée en ce que** la polyoléfine halogénée est une polyoléfine chlorée (CPO).

7. Utilisation selon la revendication 6, **caractérisée en ce que** la proportion (calculée en tant que matière solide) de polyoléfines chlorées (CPO) dans la composition va de 1 % en poids à 20 % en poids.

8. Utilisation selon la revendication 6 ou 7, **caractérisée en ce que** la proportion (calculée en tant que matière solide) de polyoléfines chlorées dans la composition va de 6 % en poids à 8 % en poids.

9. Utilisation selon l'une quelconque des revendications 6 à 8, **caractérisée en ce que** la polyoléfine chlorée est une polyoléfine ayant une teneur en chlore de 0,5 % en poids à 45 % en poids, par rapport à la teneur en matière solide des polyoléfines chlorées.

10. Utilisation selon l'une quelconque des revendications 6 à 9, **caractérisée en ce que** la polyoléfine chlorée est une polyoléfine ayant une masse moléculaire de 5 000 à 200 000 g/mole.

11. Utilisation selon l'une quelconque des revendications précédentes, **caractérisée en ce que** 20 % en poids à 80 % en poids d'eau sont contenus dans la composition.

12. Utilisation selon l'une quelconque des revendications précédentes, **caractérisée en ce que** 1 % en poids à 20 % en poids de solvant sont contenus dans la composition.

13. Utilisation selon l'une quelconque des revendications précédentes, **caractérisée en ce que** la composition contient des charges.

14. Procédé pour la mise en peinture d'un substrat en matière plastique avec une peinture à l'eau, **caractérisé en ce qu'**avant l'application sur le substrat en matière plastique on ajoute à la peinture à l'eau un additif d'adhérence contenant
- 0,1 à 40 % en poids d'au moins un liant (calculé en tant que matière solide) et
- 0,1 à 45 % en poids d'au moins un pigment et 0,5 à 30 % en poids d'au moins une polyoléfine halogénée (HPO) (calculé en tant que solide) et
- 0 à 80 % en poids d'eau et
- 0 à 25 % en poids de solvant,
les données en % en poids mentionnées ci-dessus s'ajoutant pour donner 100 % en poids.

15. Procédé selon la revendication 14, **caractérisé en ce que** l'additif d'adhérence contient des charges.

16. Procédé selon la revendication 14 ou 15, **caractérisé en ce que** la peinture à l'eau est une peinture monocomposant.

17. Procédé selon la revendication 14 ou 15, **caractérisé en ce que** la peinture à l'eau est une peinture bicomposant qui contient un durcisseur.

18. Procédé selon la revendication 17, **caractérisé en ce que** la quantité du durcisseur va de 0,5 % en poids à 25 % en poids.

19. Procédé selon l'une quelconque des revendications 14 à 18, dans lequel le subjectile en matière plastique est constitué au moins en partie d'au moins un matériau polymère.

20. Procédé selon l'une quelconque des revendications 14 à 19, **caractérisé en ce que** le substrat en matière plastique est constitué de matières plastiques ayant une teneur en polypropylène allant jusqu'à 100 % en poids.

21. Procédé selon l'une quelconque des revendications 14 à 20, **caractérisé en ce que** la peinture à l'eau est appliquée au moyen d'un pistolet à peinture sur le substrat en matière plastique.

22. Procédé selon l'une quelconque des revendications 14 à 21, **caractérisé en ce que** la surface des substrates en matière plastique est traitée à la flamme avant l'application de la couche de peinture à l'eau.

23. Procédé selon la revendication 22, **caractérisé en ce que** la surface des substrates en matière plastique est nettoyée avec un dégraissant avant le traitement à la flamme.
